# EUROPEAN PATENT APPLICATION

(11) **EP 2 898 997 A2**
(43) Date of publication of application: **29.07.2015**
(21) Application number: 15150749.8
(22) Date of filing: 12.01.2015
(51) Int. Cl.: B25J 11/00, B25J 15/00, B25J 15/06

(54) **Robot system, suction hand with cutter, and method for producing product including workpiece**

(30) Priority: 27.01.2014 JP 2014012685
(71) Applicant: Kabushiki Kaisha Yaskawa Denki, Kitakyushu-shi, Fukuoka 806-0004 (JP)
(72) Inventor: Miyoshi, Tetsuya, Kitakyushu-shi, Fukuoka 806-0004 (JP)
(74) Representative: Viering, Jentschura & Partner Patent- und Rechtsanwälte

(57) **Abstract**

A robot system includes a suction hand, a robot, and a cutter. The suction hand includes a holder configured to hold a flexible sheet-shaped workpiece. The suction hand is mountable to the robot. The cutter is disposed in a vicinity of a circumferential edge portion of the holder so as to separate a targeted workpiece from an untargeted workpiece.

## Description

### BACKGROUND

### FIELD OF THE INVENTION

The present invention relates to a robot system, a suction hand, and a method for producing a product including a workpiece.

Japanese Unexamined Patent Application Publication No. 2011-177848 discloses a transfer robot with a robot hand to which a suction hand is mounted so as to suck a to-be-transferred object. From above the to-be-transferred object, the transfer robot moves the suction hand of the robot hand close to the to-be-transferred object, causes the suction hand to suck the to-be-transferred object, and moves the robot hand upward. In this manner, the transfer robot transfers the to-be-transferred object.

The contents of Japanese Unexamined Patent Application Publication No. 2011-177848 are incorporated herein by reference in their entirety.

In some cases, the to-be-transferred object (also referred to as workpiece) may have a flexible sheet shape. When such to-be-transferred objects are aligned side by side and the transfer robot as recited in Japanese Unexamined Patent Application Publication No. 2011-177848 uses the suction hand to suck a targeted to-be-transferred object from among the to-be-transferred objects, the suction hand may suck the to-be-transferred object with an untargeted to-be-transferred object attached to the targeted to-be-transferred object.

The present disclosure has been made in view of the above-described circumstances, and it is an object of the present disclosure to provide a robot system, a suction hand, and a method for producing a product including a workpiece that eliminate or minimize the attachment of an untargeted workpiece to a targeted workpiece when the targeted workpiece is held by the suction hand.

### SUMMARY

According to one aspect of the present disclosure, a robot system includes a suction hand, a robot, and a cutter. The suction hand includes a holder configured to hold a flexible sheet-shaped workpiece. The suction hand is mountable to the robot. The cutter is disposed in a vicinity of a circumferential edge portion of the holder so as to separate a targeted workpiece from an untargeted workpiece.

The robot system according to the one aspect of the present disclosure includes a cutter in the vicinity of a circumferential edge portion of the holder of the suction hand. The cutter separates a targeted workpiece from an untargeted workpiece. Since the cutter separates the targeted workpiece from the untargeted workpiece, the attachment of the untargeted workpiece to the targeted workpiece when the targeted workpiece is held by the suction hand is eliminated or minimized.

According to another aspect of the present disclosure, a suction hand is applicable to a robot system. The robot system includes the suction hand, a robot, and a cutter. The suction hand includes a holder configured to hold a flexible sheet-shaped workpiece. The suction hand is mountable to the robot. The cutter is disposed in a vicinity of a circumferential edge portion of the holder so as to separate a targeted workpiece from an untargeted workpiece.

The suction hand according to the another aspect of the present disclosure includes a cutter in the vicinity of a circumferential edge portion of the holder of the suction hand. The cutter separates a targeted workpiece from an untargeted workpiece. Since the cutter separates the targeted workpiece from the untargeted workpiece, the suction hand eliminates or minimizes the attachment of the untargeted workpiece to the targeted workpiece when the targeted workpiece is held by the suction hand.

According to the other aspect of the present disclosure, a method is for producing a product including a workpiece. The method includes pressing a cutter against a targeted flexible sheet-shaped workpiece so as to separate the targeted flexible sheet-shaped workpiece from an untargeted flexible sheet-shaped workpiece. The cutter is disposed in a vicinity of a circumferential edge portion of a holder of a suction hand. The holder is configured to hold the targeted flexible sheet-shaped workpiece. The separated targeted workpiece is held using the holder.

The method for producing a product including a workpiece according to the other aspect of the present disclosure includes pressing a cutter against a targeted flexible sheet-shaped workpiece so as to separate the targeted flexible sheet-shaped workpiece from an untargeted flexible sheet-shaped workpiece, the cutter being disposed in the vicinity of a circumferential edge portion of the holder of the suction hand, the holder being configured to hold the targeted flexible sheet-shaped workpiece. Since the cutter separates the targeted workpiece from the untargeted workpiece, the method for producing a product including a workpiece eliminates or minimizes the attachment of the untargeted workpiece to the targeted workpiece when the targeted workpiece is held by the suction hand.

The above-described configurations eliminate or minimize the attachment of an untargeted workpiece to a targeted workpiece when the targeted workpiece is held by the suction hand.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 illustrates a general arrangement of a robot system according to a first embodiment of the present disclosure;
FIG. 2 illustrates a general arrangement of a robot in the robot system according to the first embodiment of the present disclosure;
FIG. 3 is a perspective view of a suction hand in the robot system according to the first embodiment of the present disclosure;
FIG. 4 is a bottom view of the suction hand in the robot system according to the first embodiment of the present disclosure;
FIG. 5 is a cross-sectional view taken along the line 300-300 illustrated in FIG. 4;
FIG. 6 is a block diagram illustrating the robot system according to the first embodiment of the present disclosure;
FIG. 7 illustrates a state in which the robot system according to the first embodiment of the present disclosure has moved a cutter of the suction hand to a vicinity of a workpiece;
FIG. 8 illustrates a state in which an arm of the robot in the state illustrated in FIG. 7 has moved to press the cutter against the workpiece;
FIG. 9 illustrates a state in which the cutter of the suction hand in the state illustrated in FIG. 8 has turned and cut the workpiece;
FIG. 10 is a bottom view of the suction hand illustrated in FIG. 9;
FIG. 11 illustrates a state in which the suction hand in the state illustrated in FIG. 9 has moved upward;
FIG. 12 is a bottom view of a suction hand in a robot system according to a second embodiment of the present disclosure;
FIG. 13 is a cross-sectional view taken along the line 400-400 illustrated in FIG. 12;
FIG. 14 illustrates a state in which the robot system according to the second embodiment of the present disclosure has moved a cutter of the suction hand to a vicinity of a workpiece;
FIG. 15 is a perspective view of a suction hand in a robot system according to a first modification of the present disclosure;
FIG. 16 illustrates a state in which a suction hand in a robot system according to a second modification of the present disclosure has turned in a direction (S direction) opposite to a cutting direction (R direction);
FIG. 17 is a cross-sectional view of a suction hand in a robot system according to a third modification of the present disclosure;
FIG. 18 is a cross-sectional view of a suction hand in a robot system according to a fourth modification of the present disclosure;
FIG. 19 is a cross-sectional view of a suction hand in a robot system according to a fifth modification of the present disclosure; and
FIG. 20 is a plan view of a suction hand in a robot system according to a sixth modification of the present disclosure.

### DESCRIPTION OF THE EMBODIMENTS

The embodiments will now be described with reference to the accompanying drawings, wherein like reference numerals designate corresponding or identical elements throughout the various drawings.

### (First embodiment)

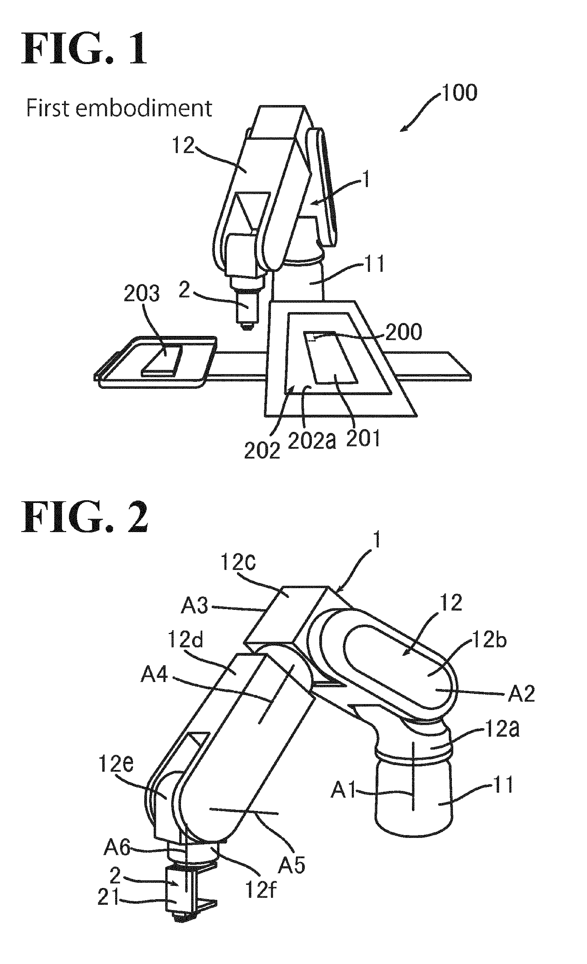

First, by referring to FIGs. 1 to 6, a configuration of a robot system 100 according to a first embodiment will be described.

As illustrated in FIG. 1, the robot system 100 according to the first embodiment includes a robot 1 and a suction hand 2. The robot 1 is a vertical multi-articular robot, and the suction hand 2 is mounted to the robot 1 to hold a flexible sheet-shaped workpiece 200.

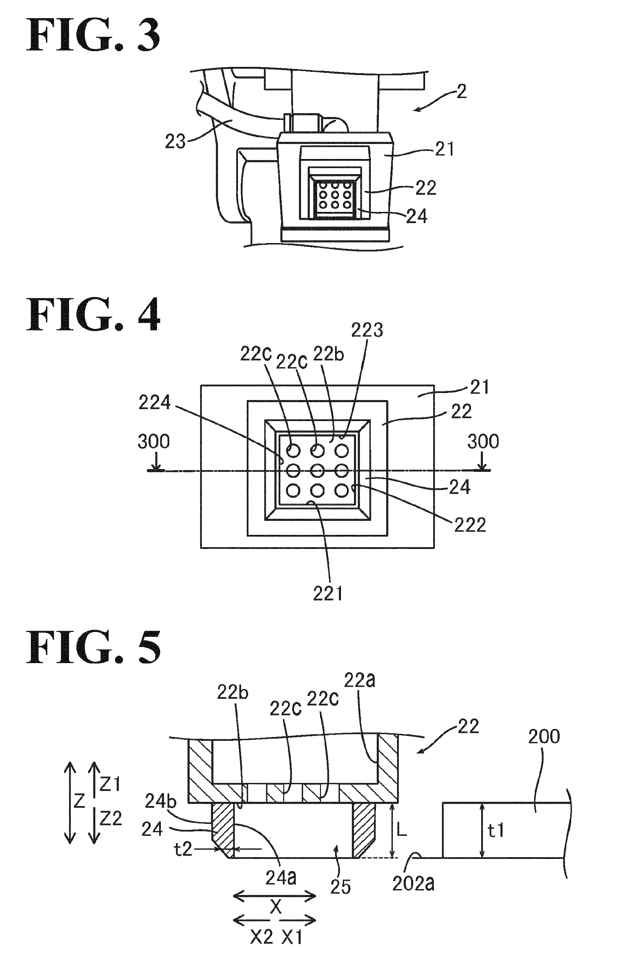

In order to obtain the workpiece 200, a cutter 24, described later, of the suction hand 2 (see FIGs. 3 to 5) cuts a largest workpiece 201 to separate an individual workpiece 200 (that is, a targeted workpiece 200 is separated from the largest workpiece 201). Then, the separated workpiece 200 is placed on (attached to) a product 203, which is disposed in the vicinity of a workpiece support 202.

As illustrated in FIGs. 1 and 2, the robot 1 includes a base 11 and an arm 12. The arm 12 is mounted on the base 11, and has six degrees of freedom.

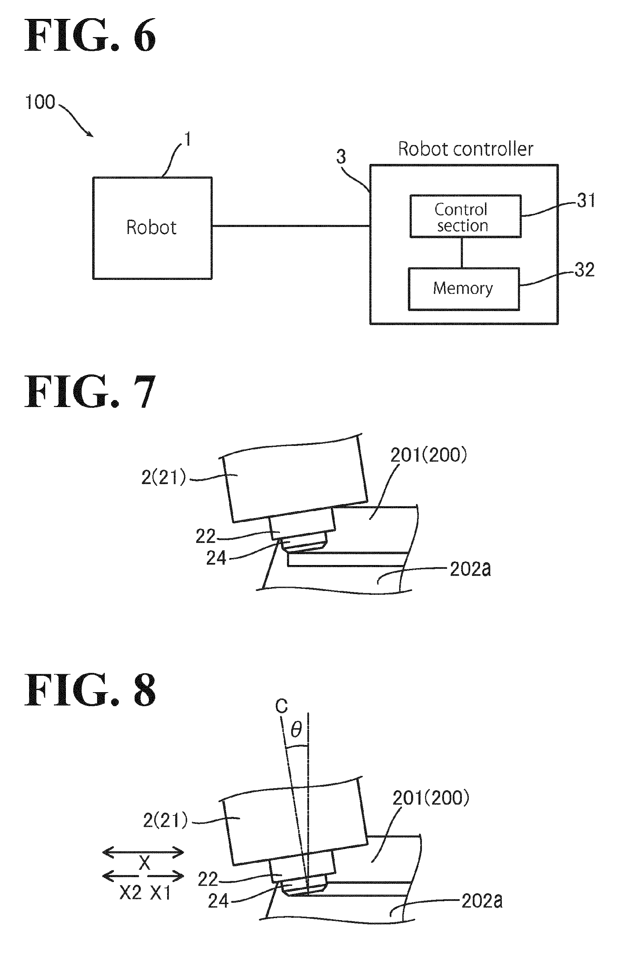

As illustrated in FIG. 2, the arm 12 has a plurality of arm structures. An arm structure 12a is coupled to the base 11 in a rotatable manner about a rotation axis A1, which is perpendicular to the installation surface of the robot 1. An arm structure 12b is coupled to the arm structure 12a in a rotatable manner about a rotation axis A2, which is perpendicular to the rotation axis A1. An arm structure 12c is coupled to the arm structure 12b in a rotatable manner about a rotation axis A3, which is parallel to the rotation axis A2. An arm structure 12d is coupled to the arm structure 12c in a rotatable manner about a rotation axis A4, which is perpendicular to the rotation axis A3. An arm structure 12e is coupled to the arm structure 12d in a rotatable manner about a rotation axis A5, which is perpendicular to the rotation axis A4. An arm structure 12f is coupled to the arm structure 12e in a rotatable manner about a rotation axis A6, which is perpendicular to the rotation axis A5. It is noted that "parallel" and "perpendicular", as used herein, are not only intended to mean precisely "parallel" and "perpendicular", respectively, but also intended more broadly to encompass slight differences from being "parallel" or "perpendicular". Each of the rotation axes A1 to A6 is equipped with a servo motor (joint). Each servo motor includes an encoder to detect the rotation position of the servo motor. Also each servo motor is coupled to a robot controller 3 (see FIG. 6) so that each servo motor operates based on a command from the robot controller 3.

As illustrated in FIG. 2, the suction hand 2 includes a mounting portion 21. The mounting portion 21 is mounted to the arm structure 12f of the robot 1. The mounting portion 21 has an approximately U shape. As illustrated in FIGs. 3 to 5, the suction hand 2 includes a box-shaped suction device 22. The suction device 22 is mounted to the mounting portion 21, and includes a hollow space 22a (see FIG. 5). A pipe 23 (see FIG. 3) is coupled in the hollow space 22a of the suction device 22 to take in or discharge air.

In the first embodiment, as illustrated in FIGs. 4 and 5, the suction device 22 of the suction hand 2 includes a suction surface 22b. The suction surface 22b faces downward (in the Z2 direction) for the workpiece 200 to be sucked onto the suction surface 22b. The suction surface 22b has a flat shape. In a vicinity of a circumferential edge portion of the suction surface 22b of the suction hand 2, a cutter 24 is disposed to separate the targeted workpiece 200 from the remaining workpiece (the largest workpiece 201, see FIG. 1). Specifically, the cutter 24 cuts the targeted workpiece 200 from the largest workpiece 201 (see FIG. 1), thus separating the targeted workpiece 200 from the largest workpiece 201. The cutter 24 is made of aluminum, SUS (Stainless steel), or another material. It is noted that the suction surface 22b is an example of the "holder" and the "holding surface".

As illustrated in FIG. 5, the cutter 24 protrudes from the suction surface 22b of the suction device 22 toward the workpiece 200 (in the Z2 direction). Specifically, the cutter 24 extends in a direction (Z direction) perpendicular to the suction surface 22b, and protrudes from a vicinity of the circumferential edge portion of the suction surface 22b toward the workpiece 200. The length, L, by which the cutter 24 protrudes from the suction surface 22b is approximately equal to the thickness, *t1*, of the workpiece 200. In addition, the length *L* (height by which the cutter 24 protrudes) by which the cutter 24 protrudes from the suction surface 22b is approximately constant throughout the entire area of the cutter 24.

As illustrated in FIG. 4, the suction surface 22b has an approximately rectangular shape in a plan view, and the cutter 24 is disposed along at least two intersecting sides of the approximately rectangular shape of the suction surface 22b. In the first embodiment, the suction surface 22b has an approximately square shape in a plan view, and the cutter 24 has a frame shape (walled shape) along the four sides (sides 221, 222, 223, and 224) of the approximately square shape of the suction surface 22b. The frame shape of the cutter 24 is disposed in the vicinity of the circumferential edge portion of the suction surface 22b, and has an approximately identical shape to the outer shape of the separated workpiece 200 in a plan view. In other words, the workpiece 200 is cut off with an approximately square shape that approximately matches the inner circumference surface of the frame shape of the cutter 24 in a plan view.

As illustrated in FIG. 5, the cutter 24 includes a surface (inner side surface) 24a at the side of the suction surface 22b. The surface 24a has a flat shape perpendicular to a placement surface 202a, on which the workpiece 200 is placed. Specifically, the surface 24a of the cutter 24, which is at the side of the suction surface 22b, extends in the direction (Z direction) perpendicular to the suction surface 22b. The cutter 24 also has an outer surface 24b. At the side of the suction surface 22b (Z1 direction side), the outer surface 24b extends in the direction (Z direction) perpendicular to the placement surface 202a. At the side of the workpiece 200 (Z2 direction side, and distal end side), the outer surface 24b is inclined relative to the direction (Z direction) perpendicular to the placement surface 202a. Thus, the distal end side of the cutter 24 has such a tapered shape that the thickness, *t*2, of the cutter 24 gradually decreases toward the distal end (Z2 direction side) of the cutter 24.

As illustrated in FIGs. 4 and 5, holes 22c are disposed on the suction surface 22b of the suction hand 2. When air is taken in through the holes 22c, the workpiece 200 is sucked onto the suction surface 22b. When air is discharged through the holes 22c, the workpiece 200 is released off the suction surface 22b. As illustrated in FIG. 4, a plurality of holes 22c (nine holes 22c in the first embodiment) are disposed. The plurality of holes 22c are arranged in a matrix. As illustrated in FIG. 5, each hole 22c is a through hole communicating with the hollow space 22a of the suction device 22. As illustrated in FIGs. 4 and 5, the suction surface 22b with the holes 22c is arranged in a space 25, which is defined by the frame shape of the cutter 24. When air is taken in (or discharged) through the pipe 23 (see FIG. 3), air is taken in (or discharged) through all the holes 22c at a time.

As illustrated in FIG. 6, the robot system 100 includes the robot 1 and a robot controller 3. The robot controller 3 controls the overall operations of the robot system 100. The robot controller 3 includes a control section 31 and a memory 32. In the first embodiment, the workpiece 200 (one largest workpiece 201) is placed on the placement surface 202a in advance. As illustrated in FIGs. 7 to 10, the control section 31 moves the arm 12 while turning the suction hand 2 relative to the placement surface 202a so as to press the cutter 24 of the suction hand 2 against the workpiece 200 and cut off the workpiece 200 (separate the targeted workpiece 200 from the largest workpiece 201), and controls the suction hand 2 to suck and hold the workpiece 200.

Next, by referring to FIGs. 7 to 11, description will be made with regard to a holding operation and an attaching operation (method for producing the product 203) with respect to the workpiece 200 in the robot system 100 according to the first embodiment. The holding operation and the attaching operation are performed by the control section 31 of the robot controller 3.

First, as illustrated in FIG. 7, by moving the arm 12 of the robot 1, the cutter 24 of the suction hand 2 is moved to a vicinity of the workpiece 200 (workpiece 201). Next, as illustrated in FIG. 8, by moving the arm 12 of the robot 1, the cutter 24 of the suction hand 2 is pressed against the workpiece 200. At the time when the cutter 24 is pressed against the workpiece 200, the cutter 24 (axis line C of the cutter 24) is inclined toward the end side (X2 direction side) of the workpiece 200 by a predetermined angle θ relative to a direction perpendicular to the surface of the workpiece 200 (workpiece 201). In addition, at the time when the cutter 24 is pressed against the workpiece 200, the edge of the cutter 24 at the X2 direction side contacts the end of the workpiece 200 at the X2 direction side.

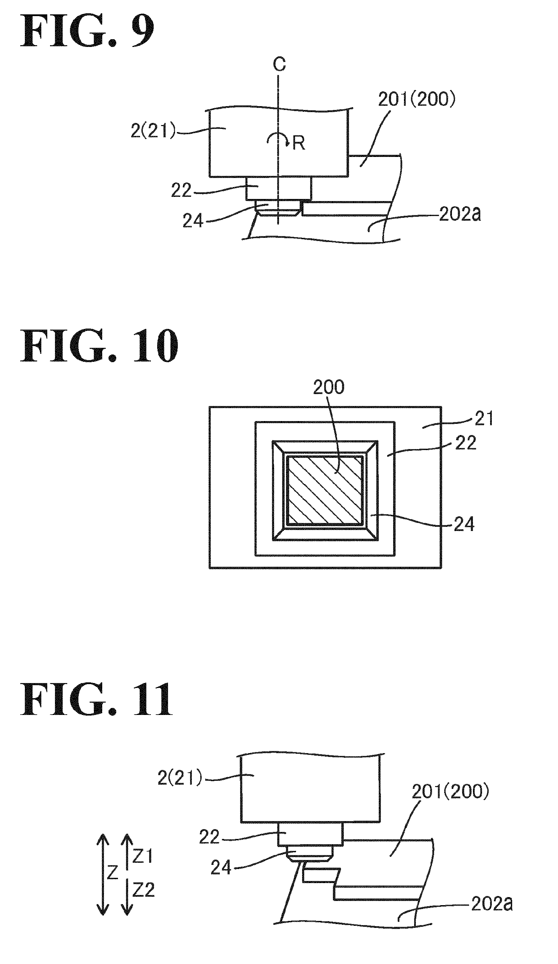

Next, as illustrated in FIG. 9, by moving the arm 12 of the robot 1, the suction hand 2 is rotated in the R direction relative to the placement surface 202a, on which the workpiece 200 (the largest workpiece 201) is placed in advance. Thus, the cutter 24 (axis line C of the cutter 24) is in the direction perpendicular to the surface of the workpiece 200 (workpiece 201). As a result, the targeted workpiece 200 is cut off the largest workpiece 201. Thus, the targeted workpiece 200 is separated from the largest workpiece 201. While in FIGs. 7 to 10 a corner of the largest workpiece 201 is cut to obtain the workpiece 200, any other portion of the largest workpiece 201 may be cut to obtain the workpiece 201. For example, it is possible to cut the workpiece 200 off the center portion of the largest workpiece 201.

Next, air is taken in through the pipe 23 (see FIG. 3), through the space 22a of the suction hand 2 (see FIG. 5), and through the holes 22c of the suction surface 22b. This causes the workpiece 200 to be sucked onto the suction surface 22b of the suction hand 2, as illustrated in FIG. 10. The workpiece 200 is cut off with an approximately square shape that approximately matches the frame shape of the cutter 24, and the cut workpiece 200 in the approximately square shape is sucked onto the suction surface 22b. Next, as illustrated in FIG. 11, the suction hand 2 moves upward (in the Z1 direction) to place the workpiece 200 on the product 203 (see FIG. 1). Next, air is discharged through the holes 22c of the suction surface 22b, and thus the workpiece 200 is attached to the product 203 (the workpiece 200 is released off the suction surface 22b). Then, the above-described operations (operations illustrated in FIGs. 7 to 11) are repeated.

In the first embodiment, the cutter 24 is provided in a vicinity of the circumferential edge portion of the suction surface 22b of the suction hand 2 to separate the targeted workpiece 200 from the other workpieces 200, as described above. Thus, the targeted workpiece 200 is separated by the cutter 24 from the other workpieces 200. This eliminates or minimizes the attachment of the other workpieces 200 to the targeted workpiece 200 while the targeted workpiece 200 is being held by the suction hand 2.

In the first embodiment, the cutter 24 protrudes from the suction surface 22b toward the workpiece 200, as described above. This ensures that the workpiece 200 held by the suction surface 22b is more easily separated from the other workpieces 200 using the cutter 24.

In the first embodiment, the cutter 24 has a frame shape along the four sides (sides 221, 222, 223, and 224) of the approximately rectangular shape of the suction surface 22b, as described above. This ensures that the targeted workpiece 200 is cut off the largest workpiece 201 with a shape matching the approximately rectangular shape of the suction surface 22b.

In the first embodiment, the holes 22c are provided on the suction surface 22b to take in air so as to suck the workpiece 200, and the suction surface 22b with the holes 22c is disposed in the space defined by the frame shape of the cutter 24, as described above. This ensures that the suction surface 22b and the workpiece 200 are surrounded by the frame shape of the cutter 24. This, in turn, eliminates or minimizes removal of excessive air from the gap between the suction surface 22b and the workpiece 200 (the sucked surface of the workpiece 200). This, as a result, increases the suction force for the workpiece 200.

In the first embodiment, the frame shape of the cutter 24 is disposed in a vicinity of the circumferential edge portion of the suction surface 22b and, the cutter 24 has an approximately identical shape to the outer shape of the separated workpiece 200, as described above. This ensures that the workpiece 200 is readily cut off in a desired shape.

In the first embodiment, the length *L* by which the cutter 24 protrudes from the suction surface 22b is approximately equal to the thickness *t1* of the workpiece 200, as described above. If the length *L* by which the cutter 24 protrudes from the suction surface 22b is smaller than the thickness of the workpiece 200 (*L < t1*), the lower end of the cutter 24 fails to reach the placement surface 202a, on which the workpiece 200 is placed. This may make it difficult to cut the targeted workpiece 200 off the largest workpiece 201. If the length *L* by which the cutter 24 protrudes from the suction surface 22b is larger than the thickness of the workpiece 200 (*L > t1*), even though the lower end of the cutter 24 reaches the placement surface 202a, on which the workpiece 200 is placed, a gap occurs between the upper surface of the workpiece 200 and the suction surface 22b. This may make it difficult to suck the workpiece 200 onto the suction surface 22b. In view of this, the length *L* by which the cutter 24 protrudes from the suction surface 22b is approximately equal to the thickness *t1* of the workpiece 200. This ensures reliability in cutting off the workpiece 200 and reliability in holding the workpiece 200.

In the first embodiment, the surface 24a of the cutter 24 at the side of the suction surface 22b has a flat shape perpendicular to the placement surface 202a, on which the workpiece 200 is placed, as described above. This makes it easier to make the side surfaces of the targeted workpiece 200 perpendicular to the placement surface 202a.

In the first embodiment, the holes 22c are provided on the suction surface 22b of the suction hand 2, as described above. Through the holes 22c, air is taken in so as to suck the workpiece 200, and the air is discharged so as to release the workpiece 200 off the suction surface 22b. By taking in (discharging) air, the workpiece 200 is readily sucked (released).

In the first embodiment, the control section 31 is provided to control the robot 1. Specifically, the control section 31 moves the arm 12 of the robot 1 while turning the suction hand 2 relative to the placement surface 202a, on which the workpiece 200 is placed in advance, so as to press the cutter 24 of the suction hand 2 against the workpiece 200 and separate the workpiece 200, and controls the suction hand 2 to suck and hold the separated workpiece 200, as described above. When the suction hand 2 (cutter 24) makes a vertically downward movement to cut off the workpiece 200, the cutter 24 may crush the workpiece 200 (the cutter 24 may deform the workpiece 200). In view of this, the arm 12 of the robot 1 moves while the suction hand 2 (cutter 24) is turned relative to the placement surface 202a, on which the workpiece 200 is placed in advance, so as to press the cutter 24 of the suction hand 2 against the workpiece 200 and separate the workpiece 200. This ensures that the workpiece 200 is gradually cut off in such a manner that the cutting starts from a corner of the workpiece 200. This, in turn, ensures effectiveness in cutting the workpiece 200 in a desired shape while eliminating or minimizing deformation of the workpiece 200.

### (Second embodiment)

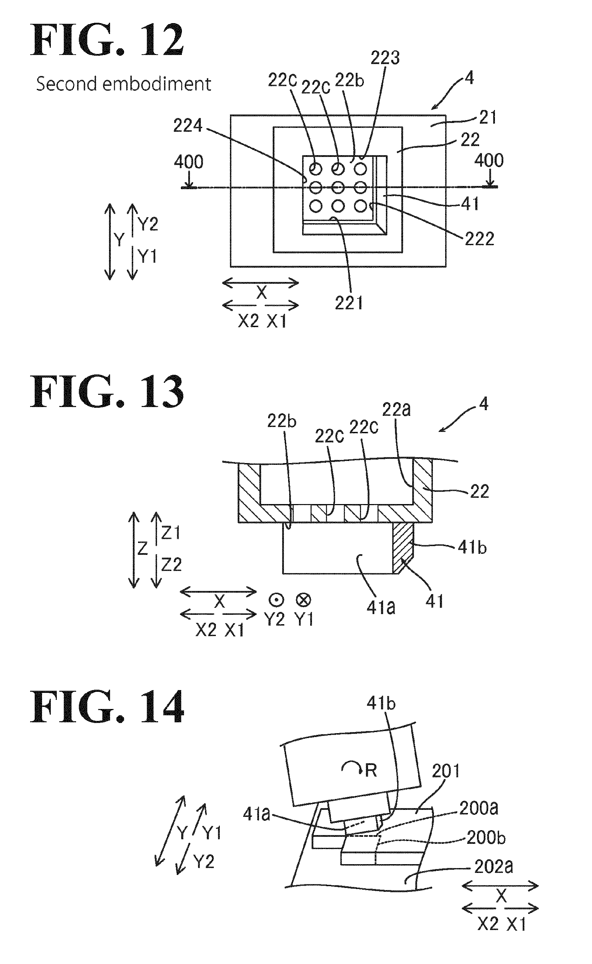

By referring to FIGs. 12 and 13, a configuration of the suction hand 4 according to a second embodiment will be described. In the first embodiment, the cutter has a frame shape along the four sides of the approximately square shape of the suction surface. In the second embodiment, the cutter is along two intersecting sides among the four sides of the approximately square shape of the suction surface.

As illustrated in FIGs. 12 and 13, a cutter 41 of the suction hand 4 is disposed along two sides (sides 221 and 222) among the four sides (sides 221, 222, 223, and 224) of the approximately square shape of the suction surface 22b. The suction hand 4 according to the second embodiment is otherwise similar to the suction hand 4 according to the first embodiment.

Next, by referring to FIG. 14, description will be made with regard to a holding operation (cut operation) with respect to the workpiece 200 performed by the cutter 41 of the suction hand 4 according to the second embodiment. The targeted workpiece 200 is indicated by dotted lines in FIG. 14. That is, in the second embodiment, the workpiece 200 is cut off a corner (at the X2 direction side and at the Y2 direction side) of a largest workpiece 201. This ensures that the workpiece 200 is cut in an approximately square shape, even though the cutter 41 of the suction hand 4 is disposed along two sides (sides 221 and 222) of the approximately square shape of the suction surface 22b.

As illustrated in FIG. 14, the cutter 41 includes a portion 41a at the Y1 direction side and a portion 41b at the X1 direction side. The targeted workpiece 200 includes a side 200a at the Y1 direction side and a side 200b at the X1 direction side. By the movement of the arm 12 of the robot 1, the portion 41a of the cutter 41 is positioned along the side 200a of the targeted workpiece 200, and the portion 41b of the cutter 41 is positioned along the side 200b of the targeted workpiece 200. Then, the cutter 41 is turned in the R direction to cut off the workpiece 200. The operations in the second embodiment are otherwise similar to the operations in the first embodiment.

In the second embodiment, the suction surface 22b has an approximately square shape (approximately rectangular shape) in a plan view, and the cutter 41 is disposed along two intersecting sides of the approximately square shape of the suction surface 22b, as described above. This simplifies the configuration of the suction hand 4, as compared with an exemplary case where the cutter 41 is disposed along the four sides of the approximately square shape of the suction surface 22b.

The advantageous effects of the second embodiment are otherwise similar to the advantageous effects of the first embodiment.

Obviously, numerous modifications and variations of the present disclosure are possible in light of the above teachings. It is therefore to be understood that within the scope of the appended claims, the disclosure may be practiced otherwise than as specifically described herein.

For example, while in the first and second embodiments the arm of the robot has been described as having six degrees of freedom, the arm of the robot may have other than six degrees of freedom (equal to or less than five degrees of freedom, or equal to or more than seven degrees of freedom).

While in the first and second embodiments the cutter of the suction hand has been described as being disposed along the four sides (or two sides) of the suction surface, the cutter of the suction hand may be disposed outside (or inside) the sides of the suction surface insofar as the cutter of the suction hand is disposed in a vicinity of the suction surface.

While in the first and second embodiments the suction surface of the suction hand has been described as being flat, the suction surface may have any other shape insofar as the shape of the suction surface matches the surface shape of the targeted workpiece.

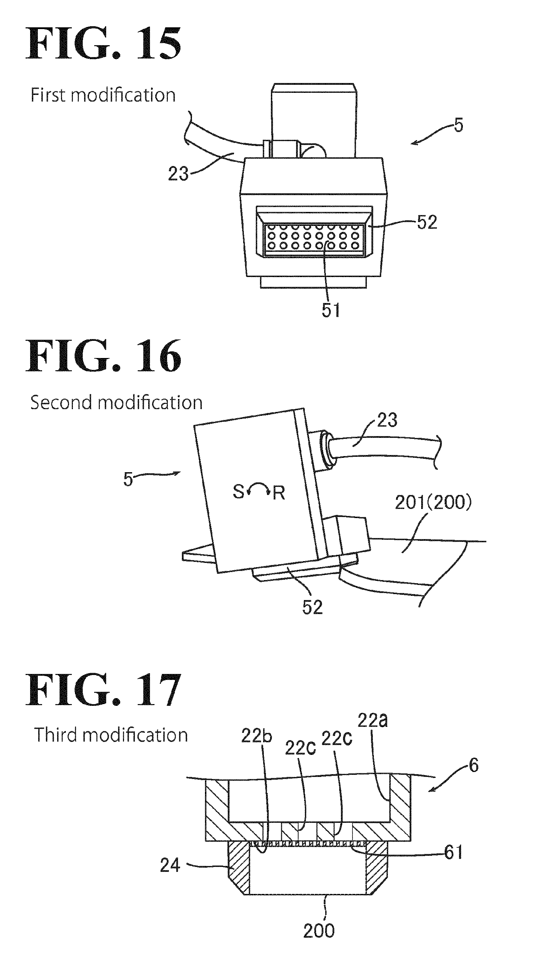

While in the first and second embodiments the suction surface of the suction hand has been described as having an approximately square shape, a suction surface 51 of a suction hand 5 may have other than an approximately square shape (examples including, but not limited to, an approximately rectangular shape) as illustrated in a first modification of FIG. 15. In this case, a frame shaped cutter 52 also has an approximately rectangular shape in a plan view. The suction surface 51 is an example of the "holder" and the "holding surface".

In the first and second embodiments, the suction hand moves upward after the targeted workpiece has been cut off. In this manner, the targeted workpiece is held (moved) (see FIG. 11). In this respect, as illustrated in FIG. 16, the remaining untargeted workpiece 201 may be sucked to the outer surface of the cutter even though the targeted workpiece is cut off and separated from the remaining untargeted workpiece 201. In this case, in a second modification illustrated in FIG. 16, after the targeted workpiece has been cut off, the suction hand 5 may be turned in the S direction, which is opposite to the R direction, to remove the remaining untargeted workpiece 201 sucked to the outer side of the cutter 52 from the cutter 52. Then, the targeted workpiece may be moved.

In the first and second embodiments, the targeted workpiece has been described as being directly sucked to the suction surface of the suction hand. In a third modification illustrated in FIG. 17, a reticulated member 61 may be disposed on the suction surface 22b of a suction hand 6. This reduces the force of taking in air through the holes 22c and eliminates or minimizes damage to the targeted workpiece 200 associated with contact with the holes 22c.

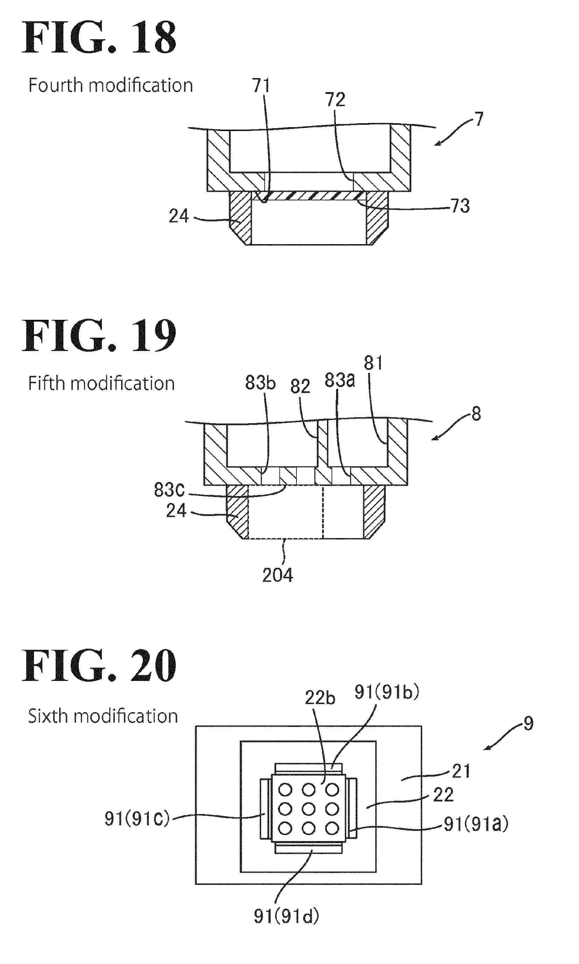

In the first and second embodiments, a plurality of holes have been illustrated as being provided on the suction surface of the suction hand. In a fourth modification illustrated in FIG. 18, a single comparatively large hole 72 may be provided on a suction surface 71 of a suction hand 7, and a porous film 73 may be provided on the surface of the hole 72. This ensures that the targeted workpiece (not illustrated in FIG. 18) is held using air taken in through the porous film 73. In addition, the porous film 73 has fine holes, and this eliminates or minimizes damage to the targeted workpiece caused by the holes of the porous film 73. The suction surface 71 is an example of the "holder" and the "holding surface".

In the first and second embodiments, air is taken in (or discharged) at a time through all the plurality of holes disposed on the suction surface. In a fifth modification illustrated in FIG. 19, a partition wall 82 may be provided in a space 81 of a suction hand 8 to take in (or discharge) air separately through a hole 83a and through a hole 83b. Thus, it is possible to use the hole 83b alone to take in air in the suction of a workpiece 204, which has a surface area smaller than the surface area of a suction surface 83c. That is, when the hole 83a is not involved in the suction of the workpiece 204, no air is taken in through the hole 83a. This eliminates or minimizes an increase in the amount of air to be taken in. The suction surface 83c is an example of the "holder" and the "holding surface".

While in the first and second embodiments the cutter has been described as being disposed along two sides or four sides of the approximately rectangular shape of the holding surface, the cutter may be disposed along one side or three sides of the approximately rectangular shape of the holding surface.

While in the first and second embodiments the length *L* by which the cutter protrudes from the suction surface has been described as being approximately constant throughout the entire area of the cutter, the length *L* by which the cutter protrudes from the suction surface may vary depending on the parts of the area of the cutter. For example, the cutter may have a cutter blade shape with a varying length *L* protruding from the suction surface.

In the first and second embodiments, the inner side surface of the cutter has been described as being perpendicular to the placement surface on which the workpiece is placed, and the outer surface of the cutter has been described as being inclined relative to the placement surface on which the workpiece is placed (see FIG. 3). Alternatively, both the inner side surface and the outer surface of the cutter may be inclined relative to the placement surface. Specifically, the cutter may have such a tapered shape that the inner side and the outer side of the cutter gradually come close to each other so as to implement a gradually decreasing thickness. Alternatively, both the inner side surface and the outer surface of the cutter may be perpendicular to the placement surface. Specifically, the cutter may have a rectangular parallelepiped shape.

In the first and second embodiments, the workpiece has been described as being sucked onto the suction surface by taking in air. When the workpiece is made of a magnetic material, for example, it is possible to use magnetic force to attract the workpiece to the suction surface so as to hold the workpiece on the suction surface.

In the first and second embodiments, the workpiece has been described as being sucked (or released) by air taken in (or discharged) through the holes. When the workpiece is of a type that can be held (or released) without taking in (or discharging) air, no holes may be provided on the suction surface.

In the first and second embodiments, the suction hand has been described as being turned relative to the placement surface on which the workpiece is placed so as to cut off (separate) the workpiece using the cutter. It is also possible to move the cutter vertically downward so as to cut off (separate) the workpiece using the cutter.

In the first and second embodiments, one largest workpiece has been described as being cut by the cutter. It is also possible to cut the largest workpiece in advance into intermediate workpieces each having smallest workpieces attached to each other, and place the intermediate workpieces. Then, one of the intermediate workpieces may be cut with the cutter to separate one of the smallest workpieces from the rest of the smallest workpieces and hold the separated smallest workpiece.

In the first embodiment, the cutter of the suction hand has been described as having a frame shape (that is not intermittent throughout the four sides of the frame shape). In a sixth modification illustrated in FIG. 20, a cutter 91 of a suction hand 9 may have four parts 91a, 91b, 91c, and 91d mutually arranged at predetermined intervals in a plan view.
- 1: Robot
- 2, 4, 5, 6, 7, 8, 9: Suction hand
- 22b, 51, 71, 83c: Suction surface (holder, holding surface)
- 22c, 72, 83a, 83b: Hole
- 24, 41, 52, 91: Cutter
- 31: Controller
- 100: Robot system
- 200, 204: Workpiece
- 202a: Placement surface
- 203: Product
- 221, 222, 223, 224: Side

## Claims

1. A robot system (100), **characterized by**:
a suction hand (2, 4, 5, 6, 7, 8, 9) comprising a holder (22b, 51, 71, 83c) configured to hold a flexible sheet-shaped workpiece;
a robot (1) to which the suction hand (2, 4, 5, 6, 7, 8, 9) is mountable; and
a cutter (24, 41, 52, 91) disposed in a vicinity of a circumferential edge portion of the holder (22b, 51, 71, 83c) so as to separate a targeted workpiece from an untargeted workpiece.

2. The robot system (100) according to claim 1,
wherein the holder (22b, 51, 71, 83c) comprises a holding surface (22b, 51, 71, 83c) to which the targeted workpiece is attached, and
wherein the cutter (24, 41, 52, 91) protrudes from the holding surface (22b, 51, 71, 83c) toward the targeted workpiece.

3. The robot system (100) according to claim 2,
wherein the holding surface (22b, 51, 71, 83c) comprises an approximately rectangular shape in a plan view, and
wherein the cutter (24, 41, 52, 91) is disposed along at least two intersecting sides of the approximately rectangular shape of the holding surface (22b, 51, 71, 83c).

4. The robot system (100) according to claim 3, wherein the cutter (24, 41, 52, 91) comprises a frame shape along four sides of the approximately rectangular shape of the holding surface (22b, 51, 71, 83c).

5. The robot system (100) according to claim 4,
wherein the holding surface (22b, 51, 71, 83c) comprises a hole (22c, 72, 83a, 83b) through which air is taken in to suck the targeted workpiece, and
wherein the holding surface (22b, 51, 71, 83c) with the hole (22c, 72, 83a, 83b) is disposed in a space defined by the frame shape of the cutter (24, 41, 52, 91).

6. The robot system (100) according to claim 4 or 5, wherein the frame shape of the cutter (24, 41, 52, 91) is disposed in a vicinity of a circumferential edge portion of the holding surface (22b, 51, 71, 83c), and comprises an approximately identical shape to an outer shape of the separated targeted workpiece in a plan view.

7. The robot system (100) according to any one of claims 2 to 6, wherein a length by which the cutter (24, 41, 52, 91) protrudes from the holding surface (22b, 51, 71, 83c) is approximately equal to a thickness of the targeted workpiece.

8. The robot system (100) according to any one of claims 1 to 7, wherein the cutter (24, 41, 52, 91) comprises a flat surface that faces the holder (22b, 51, 71, 83c) and that is perpendicular to a placement surface on which the targeted workpiece is placed.

9. The robot system (100) according to any one of claims 1 to 8, wherein the holder (22b, 51, 71, 83c) of the suction hand (2, 4, 5, 6, 7, 8, 9) comprises a hole (22c, 72, 83a, 83b) through which air is taken in to suck the targeted workpiece and through which the air is discharged to release the targeted workpiece off the holder (22b, 51, 71, 83c).

10. The robot system (100) according to any one of claims 1 to 9, further comprising a controller (31) configured to move an arm (12) of the robot (1) while turning the suction hand (2, 4, 5, 6, 7, 8, 9) relative to a placement surface on which the targeted workpiece is placed in advance so as to press the cutter (24, 41, 52, 91) of the suction hand (2, 4, 5, 6, 7, 8, 9) against the targeted workpiece and separate the targeted workpiece from the untargeted workpiece, and configured to control the suction hand (2, 4, 5, 6, 7, 8, 9) to suck and hold the separated targeted workpiece.

11. A suction hand (2, 4, 5, 6, 7, 8, 9), **characterized in that** the suction hand (2, 4, 5, 6, 7, 8, 9) is applicable to a robot system (100) comprising:
the suction hand (2, 4, 5, 6, 7, 8, 9) comprising a holder (22b, 51, 71, 83c) configured to hold a flexible sheet-shaped workpiece;
a robot (1) to which the suction hand (2, 4, 5, 6, 7, 8, 9) is mountable; and
a cutter (24, 41, 52, 91) disposed in a vicinity of a circumferential edge portion of the holder (22b, 51, 71, 83c) so as to separate a targeted workpiece from an untargeted workpiece.

12. A method for producing a product (203) including a workpiece, **characterized by**:
pressing a cutter (24, 41, 52, 91) against a targeted flexible sheet-shaped workpiece so as to separate the targeted flexible sheet-shaped workpiece from an untargeted flexible sheet-shaped workpiece, the cutter (24, 41, 52, 91) being disposed in a vicinity of a circumferential edge portion of a holder (22b, 51, 71, 83c) of a suction hand (2, 4, 5, 6, 7, 8, 9), the holder (22b, 51, 71, 83c) being configured to hold the targeted flexible sheet-shaped workpiece; and
holding the separated targeted workpiece using the holder (22b, 51, 71, 83c).
